(19) **Europäisches Patentamt**

**European Patent Office**

**Office européen des brevets**

(11) Veröffentlichungsnummer: **0 304 756 B1**

(12) **EUROPÄISCHE PATENTSCHRIFT**

(45) Veröffentlichungstag der Patentschrift: **22.01.92**

(51) Int. Cl.⁵: **A61C 7/00**, F16B 2/04

(21) Anmeldenummer: **88113225.2**

(22) Anmeldetag: **16.08.88**

(54) **Einfach montierbare Dehnschraube für Kieferdehnvorrichtungen.**

(30) Priorität: **28.08.87 DE 3728758**

(43) Veröffentlichungstag der Anmeldung:
**01.03.89 Patentblatt 89/09**

(45) Bekanntmachung des Hinweises auf die
Patenterteilung:
**22.01.92 Patentblatt 92/04**

(84) Benannte Vertragsstaaten:
**DE FR IT**

(56) Entgegenhaltungen:
**AT-B- 251 757**
**DE-A- 3 241 105**
**GB-A- 2 142 110**

(73) Patentinhaber: **DENTAURUM J.P. WINKEL-STROETER KG**
**Turnstrasse 31**
**W-7536 Ispringen(DE)**

(72) Erfinder: **Binder, Friedrich**
**Bahnholzstrasse 31**
**W-7531 Kieselbronn(DE)**
Erfinder: **Gutscher, Harald**
**Heuhalde 2/1**
**W-7132 Illingen(DE)**
Erfinder: **Röhlcke, Friedrich Wilhelm**
**Uferstrasse 23**
**W-7539 Bilfingen(DE)**

(74) Vertreter: **Hoeger, Stellrecht & Partner**
**Uhlandstrasse 14 c**
**W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

EP 0 304 756 B1

## Beschreibung

Die Erfindung betrifft eine Dehnschraube, insbesondere für Kieferdehnvorrichtungen, mit einer Spindel, umfassend einen Spindelkopf und mindestens einen Gewindeabschnitt, mit mindestens einem Führungselement, welches mindestens einen sich in Führungsrichtung erstreckenden Führungsschenkel aufweist und welches mit einer den Spindelkopf in Führungsrichtung festlegenden Aufnahme versehen ist.

Derartige Dehnschrauben sind beispielsweise aus der DE-OS 32 41 105 bekannt. Diese Dehnschrauben sind so aufgebaut, daß der Spindelkopf zwar in einer diesen fixierenden Ausnehmung des Führungselements liegt, allerdings sind diese nur so montierbar, daß zuerst die Spindel ohne den Dehnschraubenkörper in diese Ausnehmung eingesetzt werden muß und anschließend durch Drehen der Spindel der Dehnschraubenkörper von einem dem Spindelkopf abgewandten Ende des Gewindeabschnitts aufgeschraubt werden muß, da dieser zwischen zwei Führungsschenkeln aufgenommen und lediglich in Längsrichtung der Spindel verschieblich ist.

Mit dieser Konstruktion sind erhebliche Schwierigkeiten bei der Fertigung verbunden, da ein derartiger Zusammenbau der Dehnschraube äußerst aufwendig ist. Ausgehend von diesem Stand der Technik liegt der Erfindung die Aufgabe zugrunde, bei Erhaltung einer möglichst großen Dehnung und Verwindungssteifigkeit eine aus möglichst einfach herzustellenden Teilen aufgebaute und möglichst einfach zusammensetzbare Dehnschraube zu schaffen.

Diese Aufgabe wird bei einer Dehnschraube der eingangs beschriebenen Art erfindungsgemäß dadurch gelöst, daß die Aufnahme eine quer zur Führungsrichtung weisende Öffnung zum Einsetzen des Spindelkopfes besitzt und daß der Dehnschraubenkörper den Führungsschenkel in mindestens einer quer zur Führungsrichtung weisenden Richtung freigebend ausgebildet ist.

Durch diese Kombination von Merkmalen ist es möglich, die Dehnschraube derart zusammenzubauen, daß zuerst der Dehnschraubenkörper auf dem Gewindeabschnitt vormontiert wird und anschließend zum Zusammenbau der erfindungsgemäßen Dehnschraube das Führungselement quer zur Führungsrichtung ein oder aufgesetzt werden kann. Um dieses Führungselement nach einer Vormontage des Dehnschraubenkörpers quer zur Führungsrichtung aufsetzen zu können, ist es nicht nur ausreichend, daß die Aufnahme eine in diese Richtung weisende Öffnung besitzt, sondern daß außerdem der Dehnschraubenkörper den Führungsschenkel in derselben Richtung frei gibt, so daß das Führungselement als Ganzes auf- oder eingesetzt werden kann.

Bei dem vorstehend beschriebenen Ausführungsbeispiel kann es sich bei der Spindel sowohl um eine Einfach- als auch um eine Doppelspindel handeln. Um eine möglichst große Dehnung zu erreichen, ist es jedoch stets zweckmäßig, wenn die Spindel eine Doppelspindel mit zwei gegenläufigen Gewindeabschnitten ist, wobei jedem Gewindeabschnitt ein Dehnschraubenkörper zugeordnet ist.

Die Aufnahme für den Spindelkopf kann auf die unterschiedlichste Art und Weise ausgebildet sein. So ist es bei einem sehr einfachen Ausführungsbeispiel denkbar, daß die Aufnahme eine den Spindelkopf teilweise umgreifende Ausnehmung in dem Führungselement ist. Das heißt also, daß das Führungselement an der Stelle, die dem Spindelkopf zugewandt ist, eine Ausnehmung trägt, in welche dieser hineinragt.

Eine weitere im Rahmen der vorliegenden Erfindung bevorzugte Ausführungsform sieht vor, daß die Aufnahme sich quer zur Führungsrichtung erstreckende und den Spindelkopf zwischen sich aufnehmende Fortsätze aufweist. Diese Fortsätze können als kurze Stummel ausgebildet sein und den Spindelkopf in radialer Richtung lediglich über ein kurzes Stück übergreifen.

Es ist aber auch möglich, daß diese Fortsätze als die Spindel übergreifende Querspangen ausgebildet sind und somit den Gewindeabschnitt in der Art einer Halbschale umgreifen, so daß sie eine nahezu halbkreisringförmige Anlage für den Spindelkopf bilden. Im Falle einer Einfachspindel würde es in diesem Fall genügen, wenn einer der Fortsätze als den Gewindeabschnitt übergreifende Querspange ausgebildet ist, während im Falle einer Doppelspindel beide Fortsätze als den sich in der jeweiligen Richtung an den Spindelkopf anschliessenden Gewindeabschnitt übergreifende Querspangen auszubilden sind.

Erfindungsgemäß ist es ausreichend, wenn der Dehnschraubenkörper den Führungsschenkel in mindestens einer quer zur Führungsrichtung weisenden Richtung freigebend ausgebildet ist, so daß der Führungsschenkel in dieser Richtung bei der Montage eingesetzt werden kann. Selbstverständlich ist dabei nicht ausgeschlossen, daß der Dehnschraubenkörper auch so ausgebildet ist, daß er den Führungsschenkel in mehreren quer zur Führungsrichtung weisenden Richtungen frei gibt.

Ein Ausführungsbeispiel der erfindungsgemäßen Dehnschraube sieht daher vor, daß der Führungsschenkel sich längs des Dehnschraubenkörpers berührungsfrei erstreckt, das heißt, daß der Dehnschraubenkörper so ausgebildet ist, daß er keinerlei Wechselwirkung mit dem Führungsschenkel eingeht.

Bei einem anderen bevorzugten Ausführungs-

2

beispiel ist es denkbar, daß der Führungsschenkel an dem Dehnschraubenkörper anliegt. In diesem Fall weist der Dehnschraubenkörper zwar eine Anlagefläche für den Führungsschenkel auf, gibt diesen aber ansonsten frei.

Bei den beiden vorstehend genannten Ausführungsformen ist somit keine direkte Führung des Dehnschraubenkörpers am Führungsschenkel vorgesehen. Die Führung erfolgt bei diesen Ausführungsbeispielen lediglich dadurch, daß für den frei neben dem Dehnschraubenkörper liegenden Führungsschenkel beim Eingießen desselben in die Kieferdehnplatte ein Führungskanal in dem Kunststoffmaterial der Kieferdehnplatte gebildet wird, in welchem dieser Führungsschenkel parallel zur Spindelachse geführt wird. Ein derartiger Aufbau der erfindungsgemäßen Dehnschraube hat den großen Vorteil, daß der Dehnschraubenkörper selbst beispielsweise als Quader oder als Zylinder ausgebildet sein kann und daher sehr einfach herzustellen und zu montieren ist.

In den Fällen, in denen trotzdem eine gewisse Führung und Verdrehsicherung des Dehnschraubenkörpers an den Führungsschenkeln erwünscht ist, ist vorgesehen, daß der Dehnschraubenkörper eine den Führungsschenkel U-förmig umgreifende Führungsausnehmung aufweist. In diese U-förmige Führungsausnehmung ist dann der Führungsschenkel bei der Montage quer zur Führungsrichtung einsetzbar. Zweckmäßigerweise ist diese Ausnehmung einem Querschnitt der Führungsschenkel angepaßt.

Besonders vorteilhaft ist es, wenn die U-förmige Führungsausnehmung zu einer von der Spindel abgewandten Seite hin offen ist. In diesem Fall ist dann der Führungsschenkel und somit das Führungselement von dieser Seite her einsetzbar.

Bei dem vorstehend beschriebenen Ausführungsbeispiel wurde lediglich davon gesprochen, daß der Dehnschraubenkörper eine derartige Führungsausnehmung aufweist. Aus Symmetriegründen ist es jedoch vorteilhaft, wenn der Dehnschraubenkörper beiderseits der Spindel angeordnete Führungsausnehmungen aufweist.

Bei der Beschreibung der bisherigen Ausführungsformen der erfindungsgemäßen Dehnschraube wurde auf die Art der Anordnung des Führungselements selbst nicht näher eingegangen. Um der erfindungsgemäßen Dehnschraube eine kleine Bauhöhe bei optimaler Torsionssteifigkeit zu vermitteln, hat es sich als zweckmäßig erwiesen, wenn das Führungselement im wesentlichen in einer durch eine Spindelachse hindurch verlaufenden Längsmittelebene liegt.

Des weiteren ist es vor allem auch im Hinblick auf eine möglichst einfache und rationelle Herstellung des Führungselements von Vorteil, wenn dieses aus Flachmaterial hergestellt ist, wobei es sich in diesem Fall vorwiegend um ein durch Drahterosion ausgeschnittenes oder durch Stanzen hergestelltes Teil handelt.

Weiterhin wurde bislang auch auf die Form der Führungsschenkel selbst nicht näher eingegangen, diese können zum Beispiel im Querschnitt rund ausgebildet sein. Insbesondere um eine möglichst große Steifigkeit gegen Verdrehen einer in eine Kieferdehnplatte eingegossenen Dehnschraube zu erreichen, hat es sich als vorteilhaft erwiesen, wenn der Führungsschenkel einen eckigen Querschnitt aufweist, da dadurch ein Verdrehen des Führungsschenkels selbst in dem für diesen vorhandenen Führungskanal in der Kieferdehnplatte verhindert wird.

Noch besser ist es jedoch, wenn bei einem aus Flachmaterial hergestellten Führungselement der Führungsschenkel mit seiner Flachseite parallel zur Längsmittelebene angeordnet ist, da in diesem Fall bei einem Verdrehen der beiden Hälften der Kieferdehnplatte relativ zueinander der Führungsschenkel mit seiner Flachseite belastet ist.

Bei den bislang beschriebenen Ausführungsbeispielen wurde nicht näher darauf eingegangen, wie die Führungselemente mit ihren Führungsschenkeln ausgebildet sein sollen. So ist es z.B. möglich, daß das Führungselement einen oder zwei sich in entgegegengesetzte Richtungen auf einer Seite der Spindel erstreckende Führungsschenkel aufweist, so daß dieses Führungselement als Ganzes lediglich auf einer Seite der Spindel angeordnet ist.

Es ist aber auch möglich, daß die Führungselemente jeweils ein oder im Fall einer Doppelspindel zwei in entgegengesetzte Richtungen weisende Paare von sich parallel zueinander erstreckenden Führungsschenkeln aufweisen, wobei jeweils zwischen einem Paar von Führungsschenkeln ein Dehnschraubenkörper eingeschlossen ist.

Bei den bisher beschriebenen Ausführungsbeispielen wurde lediglich davon ausgegangen, daß ein Führungselement vorhanden ist. Es ist jedoch, insbesondere zur Verbesserung der Verdrehsteifigkeit einer derartigen Dehnschraube, vorteilhaft, wenn die Spindel und der Dehnschraubenkörper zwischen zwei einander gegenüberliegenden Führungselementen eingeschlossen sind.

Bei den Dehnschrauben besteht die Gefahr, daß sie im Einsatz, eingegossen in eine Kieferdehnplatte so weit aufgedreht werden, daß der Gewindeabschnitt aus dem ihm zugeordneten Dehnschraubenkörper vollständig herausgedreht ist. Um dies zu verhindern, ist eine Dehnungsbegrenzung vorteilhaft, wobei sich bei dem aus dem Stand der Technik bekannten Dehnschrauben stets das Problem ergab, daß eine Dehnungsbegrenzung aufwendig und teuer anzubringen war, da sie erst nach vollständig montierter Dehnschraube angebracht werden konnte.

Bei der erfindungsgemäßen Lösung ist vorgesehen, daß mindestens ein Gewindeabschnitt mit einer Dehnungsbegrenzung versehen ist. Dies bietet sich an, weil aufgrund des wesentlich einfacheren Zusammenbaus ein Anbringen der Dehnungsbegrenzung bereits vor der vollständigen Montage der gesamten Dehnschraube möglich ist, da die Führungselemente quer zur Führungsrichtung ein- oder aufsetzbar sind.

Ein einfaches Ausführungsbeispiel einer derartigen Dehnungsbegrenzung sieht vor, daß der Gewindeabschnitt auf seinem dem Spindelkopf gegenüberliegenden Ende mit einer Verformung versehen ist, wobei diese Verformung beispielsweise ein an dem Gewindeabschnitt angeformter und sich zumindest in einer radialen Richtung bis zu einem Außenradius des Gewindeabschnitts erstreckender Mehrkant ist, welcher vorzugsweise mit einer Wachskappe abgedeckt ist. Beim Aufdrehen läuft diese Verformung zwar in ein sich bei Eingießen in die Kieferdehnplatte bildendes Gegengewinde hinein, dies ist aber erwünscht, da dadurch zusätzlich noch eine im eingegossenen Zustand erforderliche Schwergängigkeit der Spindel und somit eine Verdrehsicherung auf einfache Weise erreichbar ist.

Der Dehnschraubenkörper selbst kann eine beispielsweise zylindrische oder auch profilierte Außenform haben, die je nach Bedarf noch mit Retentionen versehen ist.

Weitere Merkmale und Vorteile sind Gegenstand der folgenden Beschreibung sowie der zeichnerischen Darstellung einiger Ausführungsbeispiele. In der Zeichnung zeigen:

Fig. 1    eine perspektivische Darstellung eines ersten Ausführungsbeispiels der erfindungsgemäßen Dehnschraube;

Fig. 2    einen Schnitt längs Linie 2-2 in Fig. 1;

Fig. 3    einen Schnitt längs Linie 3-3 in Fig. 1;

Fig. 4    einen Schnitt ähnlich Fig. 2 durch ein zweites Ausführungsbeispiel;

Fig. 5    eine perspektivische Darstellung ähnlich Fig. 1 eines dritten Ausführungsbeispiels;

Fig. 6    einen Schnitt längs Linie 6-6 in Fig. 5;

Fig. 7    einen Schnitt längs Linie 7-7 in Fig. 5

Fig. 8    einen Schnitt längs Linie 8-8 in Fig. 5.

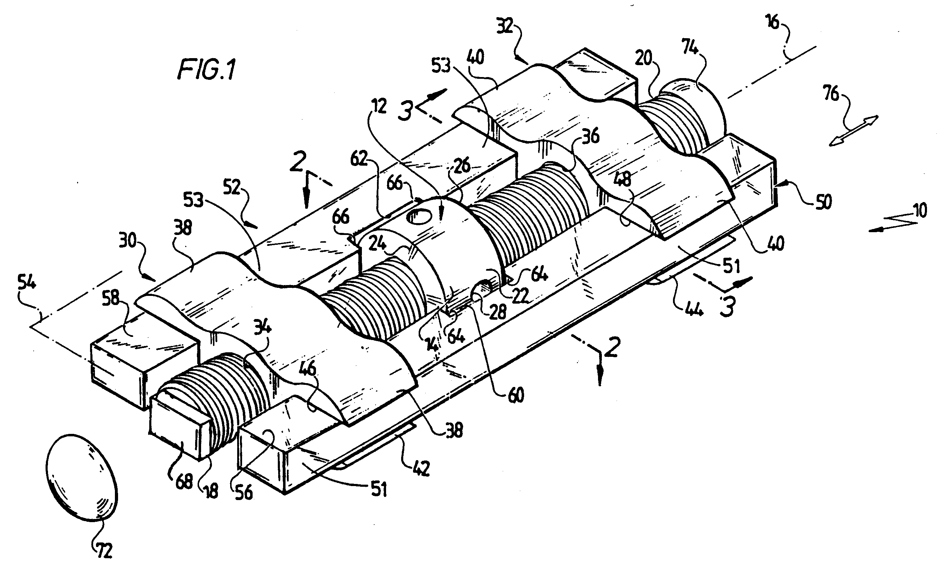

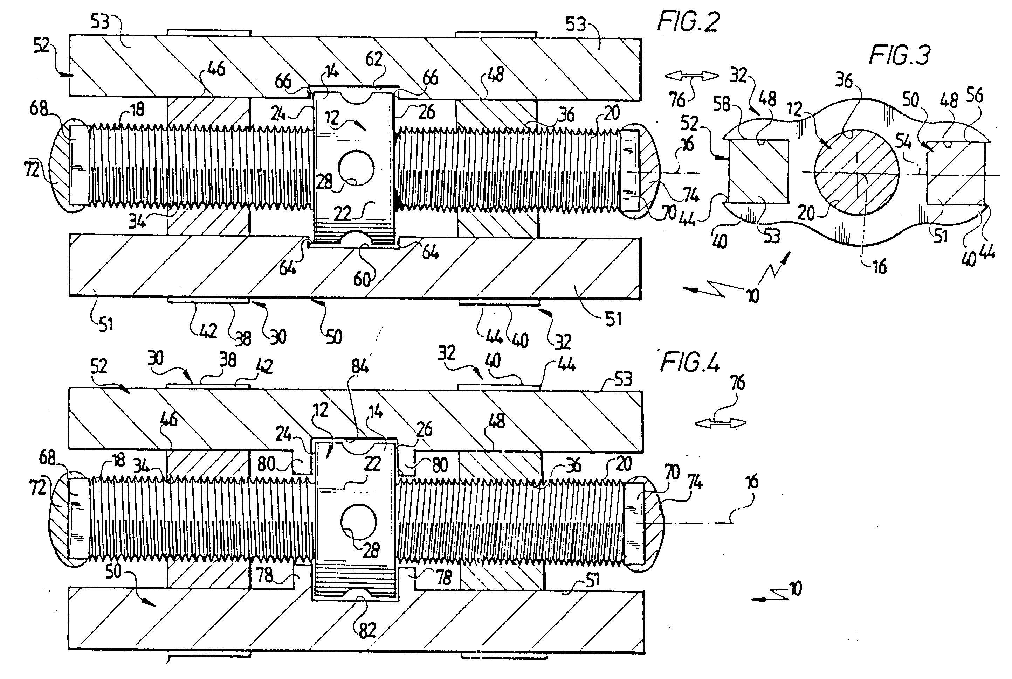

Fig. 1 zeigt im einzelnen eine perspektivische Darstellung eines ersten Ausführungsbeispiels einer als Ganzes mit 10 bezeichneten Dehnschraube.

Diese Dehnschraube 10 umfaßt eine als Doppelspindel ausgebildete Spindel 12 mit einem mittig angeordneten Spindelkopf 14 und zwei sich beidseitig des Spindelkopfs von diesem weg längs einer Spindelachse 16 erstreckenden Gewindeabschnitten 18 und 20. Der Spindelkopf 14 hat dabei einen größeren Durchmesser als die Gewindeabschnitte 18 und 20 und steht daher in der Art eines kreiszylindrisch ausgebildeten Ringwulstes über die Gewindeabschnitte 18 und 20 ber. Dadurch entstehen beiderseits des Spindelkopfs 14 sich von einer Umfangsfläche der Gewindeabschnitte 18 und 20 in radialer Richtung bis zu einer Mantelfläche 22 erstreckende und senkrecht zur Spindelachse 16 stehende Kreisringflächen 24 bzw. 26.

Zum Drehen ist der Spindelkopf 14 noch mit sich in radialer Richtung zur Spindelachse 16 diametral durch diesen hindurch erstreckenden Bohrungen 28 versehen.

Die Gewindeabschnitte 18 und 20 erstrecken sich jeweils durch Dehnschraubenkörper 30 bzw. 32, welche eine die Gewindeabschnitte 18 bzw. 20 aufnehmende Gewindebohrung 34 und 36 aufweisen.

Die beiden Dehnschraubenkörper 30 bzw. 32 sind bis auf die Innengewinde identisch ausgebildet und mit zwei sich diametral entgegengesetzt zur Spindelachse 16 seitlich weg erstreckenden Flügeln 38 bzw. 40 versehen. Jeder dieser Flügel weist eine sich parallel zur Spindelachse 16 erstreckende und in Richtung von der Spindel weg mit einer Öffnung 42 bzw. 44 versehene Rechtecknut 46 bzw. 48 auf.

In diese jeweils in Richtung von der Spindel 12 weg nach einer Seite offenen Rechtecknuten 46 und 48 ist jeweils ein Führungselement 50 bzw. 52 mit sich zu beiden Seiten erstreckenden Führungsschenkeln 51 bzw. 53 eingesetzt, wobei die Führungsschenkel 51 bzw. 53 vorzugsweise leistenförmig ausgebildet sind und einen rechteckigen Querschnitt aufweisen. Dabei erstrecken sich die Führungsschenkel 51 durch die in Fig. 1 bis 3 nach rechts offenen Rechtecknuten 46 und 48, während sich die Führungsschenkel 53 durch die beiden nach links offenen Rechtecknuten 46 und 48 erstrecken. Diese Führungschenkel 51 und 53 sind vorzugsweise im Querschnitt als flaches Rechteck ausgebildet und vorzugsweise so an den Dehnschraubenkörpern 30 und 32 geführt, daß sie in einer durch die Spindelachse 16 hindurch verlaufenden Längsmittelebene 54 liegen, wobei deren Breitseiten 56 bzw. 58 parallel zu der Längsmittelebene 54 ausgerichtet sind.

Die beiden Führungselemente 50 bzw. 52 sind mittig mit jeweils einer U-förmigen, sich in Richtung der Spindelachse 16 erstreckenden Ausnehmung 60 bzw. 62 versehen, welche zwischen ihren senkrecht zur Spindelachse 16 verlaufenden Anlageflächen 64 bzw. 66 den sich in der Art eines Ringwulstes über den Umfang der Gewindeabschnitte 18 und 20 hinaus erstreckenden Teil des Spindelkopfes 14 aufnehmen und dadurch in Richtung der Spindelachse 16 unverschieblich fixieren, so daß die Kreisringflächen 24 bzw. 26 zwischen den Anlageflächen 64 bzw. 66 eingeschlossen sind.

Die beiden Gewindeabschnitte 18 und 20 sind jeweils an ihrem dem Spindelkopf 14 abgewandten Ende mit einer Dehnungsbegrenzung versehen, welche eine an diesem Ende angebrachte Verformung des jeweiligen Gewindeabschnitts 18 bzw. 20, z.B. in Form eines Vierkants 68 bwz.70 umfaßt. Diese Verformung erstreckt sich in mindestens einer radialen Richtung bis zu einem Außenradius des Gewindeabschnitts 18 bzw. 20, so daß sich die Verformung nicht durch die Gewindebohrung 34 bzw. 36 des jeweiligen Dehnschraubenkörpers 30 bzw. 32 hindurchschrauben läßt. Diese Verformung ist mit einer aufgesetzten Kappe 72 bzw. 74 versehen, die beim Eingießen der Dehnschraube in eine Kierdehnplatte schmilzt und der Verformung den notwendigen Bewegungsspielraum beim Drehen verschafft.

Der Vorteil des ersten Ausführungsbeispiels der erfindungsgemäßen Dehnschraube ist darin zu sehen, daß die beiden Führungselemente 50 bzw. 52 durch die Öffnungen 42 bzw. 44 der Rechtecknuten 46 bzw. 48 seitlich quer zu ihrer durch den Pfeil 76 angedeuteten Führungsrichtung, in die Rechtecknuten 46 bzw. 48 einsetzbar sind. Damit ist eine Vormontage der Dehnschraubenkörper 30 bzw. 32 auf den Gewindeabschnitten 18 bzw. 20 möglich, so daß dann die Führungselemente 50 und 52 als letztes eingesetzt werden. Die Anbindung der Führungselemente zum Verkauf und zum Eingießen in die Kieferdehnplatte erfolgt dann erfindungsgemäß mit einem der üblichen Dehnschraubenhalter z.B. aus Kunststoff.

Beim Drehen der Spindel 12 ist nun diese durch ihren Spindelkopf 14 in den Ausnehmungen 60 bzw. 62 in Führungsrichtung 76 geführt, so daß die Schraubenkörper 30 bzw. 32 in Führungsrichtung bewegbar sind und an den Führungsschenkeln 51 bzw. 53 entlanggleiten.

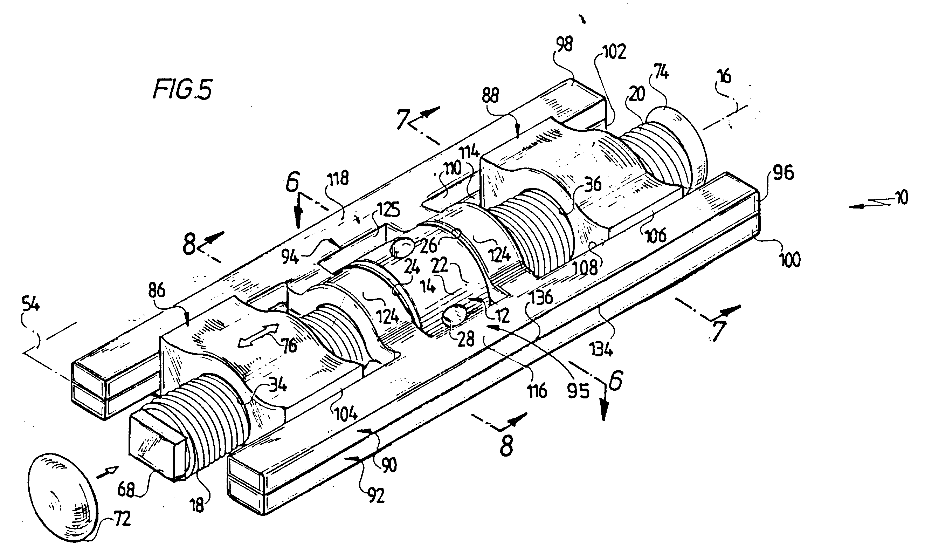

Bei einem zweiten Ausführungsbeispiel, dargestellt in Fig. 4 sind mit dem ersten Ausführungsbeispiel identische Teile mit denselben Bezugszeichen versehen. Bezüglich deren Beschreibung wird auf die Beschreibung zum ersten Ausführungsbeispiel verwiesen.

Im Gegensatz zum ersten Ausführungsbeispiel sind allerdings die Führungselemente 50 und 52 mit sich in Richtung auf die Spindel 12 erstreckenden Fortsätzen 78 bzw. 80 versehen, welche ihrerseits eine zwischen diesen liegende U-förmige und zur Spindel 12 hin offene Aussparung 82 bzw. 84 bilden, die den Spindelkopf 14 ähnlich wie die Ausnehmungen 60 und 62 in Richtung der Spindelachse 16 dadurch fixieren, daß sie diesen im Bereich seiner beiden Kreisringflächen 24 bzw. 26 umschließen.

Bei einem dritten Ausführungsbeispiel der erfindungsgemässen Dehnschraube, dargestellt in den Fig. 5 bis 8, ist die Spindel 12 selbst identisch wie bei den vorhergehenden Ausführungsbeispielen ausgebildet und daher sind auch deren Teile mit denselben Bezugszeichen versehen.

Dagegen sind die Dehnschraubenkörper 86 und 88 nicht mehr mit Flügeln versehen, sondern beispielsweise in der Form eines quaderförmigen Blocks ausgebildet, sie können aber auch beispielsweise in der Form eines Zylinders ausgebildet sein.

Im Gegensatz zu den vorhergehenden Ausführungsbeispielen sind auch die Führungselemente 90 und 92 so ausgebildet, daß sich von deren den Spindelkopf 14 aufnehmendem Mittelteil 94 bzw. 95 in entgegengesetzten Richtungen jeweils ein Paar von Führungsschenkeln 96 und 98 bzw. 100 und 102 erstreckt, das den jeweiligen Dehnschraubenkörper 86 bzw. 88 zwischen sich einschließt. Bei dem in den Fig. 5 bis 8 dargestellten Ausführungsbeispiel ist der jeweilige Dehnschraubenkörper 86 bzw. 88 beidseitig mit Führungsflächen 104 bzw. 106 versehen, welche an Innenseiten 108 und 110 bzw. 112 und 114 der Führungsschenkel 96 und 98 bzw. 100 und 102 anliegen. Es ist aber auch denkbar, die Dehnschraubenkörper 86 bzw. 88 so auszubilden, daß sie berührungsfrei zwischen den Führungsschenkeln 96 und 98 bzw. 100 und 102 liegen.

Die Mittelteile 94 und 95 sind durch zwei sich in Fortsetzung der Führungsschenkel 96 und 98 bzw. 100 und 102 erstreckende Außenstege 116 und 118 bzw. 120 und 122 gebildet, zwischen denen sich jeweils ein Paar von den Spindelkopf 14 zwischen sich einschließenden Querspangen 124 bzw. 126 erstreckt. Diese Querspangen 124 bzw. 126 übergreifen die Spindel 12 im Bereich der sich an den Spindelkopf 14 anschließenden Gewindeabschnitte 18 bzw. 20 in der Art einer Lagerhalbschale und sind daher vorzugsweise mit dem die Gewindeabschnitte 18 bzw. 20 übergreifenden Teil halbkreisförmig gebogen. Der Spindelkopf 14 liegt somit wiederum mit seinen beiden Kreisringflächen 24 bzw. 26 an den sich beiderseits von diesem erstreckenden und eine Aufnahme für diesen bildenden Querspangen 124 bzw. 126 an und ist dadurch in Führungsrichtung 76 fixiert.

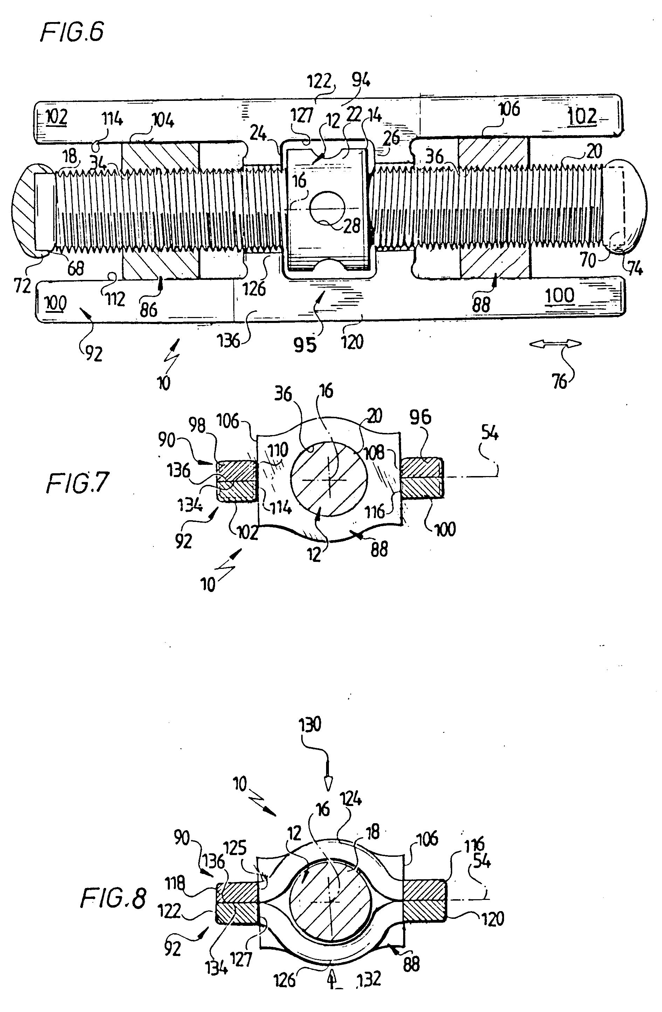

Die mit ihren Querspangen 124 bzw. 126 eine Art Lagerhalbschalen bildenden Führungselemente 90 bzw. 92 sind daher quer zur Führungsrichtung 76 und senkrecht zur Längsmittelebene 54 von oben und unten, wie in Fig. 8 durch die Pfeile 130 und 132 dargestellt, die Spindel 12 zwischen sich aufnehmend, auf diese aufsetzbar. Im zusammengesetzten Zustand liegen dann die beiden Führungselemente 90 und 92 mit ihren einander zugewandten Seiten 134 und 136 aneinander an und bilden eine geschlossene Einheit für die Aufnahme der Spindel 12.

Die vorteilhafte Ausführungsform der Fig. 5 bis 8 erlaubt somit durch die quer zur Führungsrichtung und senkrecht zur Längsmittelebene 54 offenen Aufnahmen, gebildet durch die halbkreisförmig gebogenen Querspangen 124 bzw. 126, ein einfaches Einsetzen des Spindelkopfes 14 quer zur Führungsrichtung, wobei in diesem Fall die Dehnschraubenkörper 86 bzw. 88 die Führungsschenkel 96 und 98 bzw. 100 und 102 in dieser Richtung freigeben und dadurch einen einfachen Zusammenbau der erfindungsgemäßen Dehnschraube durch Aufsetzen der Führungselemente 90 bzw. 92 quer zur Führungsrichtung bei bereits auf den Gewindeabschnitten 18 bzw. 20 montierten Dehnschraubenkörpern 86 bzw. 88 ermöglichen.

**Patentansprüche**

1. Dehnschraube für eine Kieferdehnplatten aufweisende Kieferdehnvorrichtung mit folgenden Merkmalen:

    - einer Spindel (12) mit einem Spindelkopf (14) und mindestens einem Gewindeabschnitt (18, 20),
    - mindestens einem Dehnschraubenkörper (30, 32, 86, 88), in den der Gewindeabschnitt (18, 20) der Spindel (12) eingeschraubt ist,
    - und mindestens einem Führungselement (50, 52, 90, 92), das mindestens einen sich in Führungsrichtung erstreckenden Führungsschenkel (51, 53, 96, 98, 100, 102) zur Führung der Kieferdehnplatten aufweist, das eine quer zur Führungsrichtung weisende Öffnung zur Aufnahme und Festlegung des Spindelkopfes (14) in Führungsrichtung umfaßt und das quer zur Führungsrichtung abnehmbar auf die Spindel (12) aufsetzbar ist, wobei gleichzeitig das Führungselement (50, 52, 90, 92) von dem Dehnschraubenkörper (30, 32, 86, 88) quer zur Führungsrichtung freigebend gehalten ist, so daß dieses als Ganzes auf- oder einsetzbar ist.

2. Dehnschraube nach Anspruch 1, dadurch gekennzeichnet, daß die Spindel (12) eine Doppelspindel mit zwei gegenläufigen Gewindeabschnitten (18, 20) ist, wobei jedem Gewindeabschnitt (18, 20) ein Dehnschraubenkörper (30, 32, 86, 88) zugeordnet ist.

3. Dehnschraube nach einem der Ansprüche 1 oder 2, dadurch gekennzeichnet, daß die Aufnahme eine den Spindelkopf zumindest teilweise umgreifende Ausnehmung (60, 62) im Führungselement (50, 52) ist.

4. Dehnschraube nach Anspruch 1 oder 2, dadurch gekennzeichnet, daß die Aufnahme zwei sich quer zur Führungsrichtung (76) erstreckende und den Spindelkopf (14) zumindest teilweise zwischen sich aufnehmende Fortsätze (78, 80, 124, 126) umfaßt.

5. Dehnschraube nach Anspruch 4, dadurch gekennzeichnet, daß die Fortsätze (124, 126) den Gewindeabschnitt (18, 20) in der Art einer Halbschale umgreifen.

6. Dehnschraube nach einem der voranstehenden Ansprüche, dadurch gekennzeichnet, daß der Führungsschenkel (96, 98, 100, 102) sich längs des Dehnschraubenkörpers (86, 88) berührungsfrei erstreckt.

7. Dehnschraube nach einem der Ansprüche 1 bis 5, dadurch gekennzeichnet, daß der Führungsschenkel (96, 98, 100, 102) an dem Dehnschraubenkörper (86, 88) anliegt.

8. Dehnschraube nach einem der Ansprüche 1 bis 5, dadurch gekennzeichnet, daß der Dehnschraubenkörper (30, 32) eine den Führungsschenkel (51, 53) U-förmig umgreifende Führungsausnehmung (46, 48) aufweist.

9. Dehnschraube nach Anspruch 8, dadurch gekennzeichnet, daß die U-förmige Führungsausnehmung (46, 48) zu einer von der Spindel (12) abgewandten Seite hin offen ist.

10. Dehnschraube nach Anspruch 8 oder 9, dadurch gekennzeichnet, daß der Dehnschraubenkörper (30, 32) beiderseits der Spindel (12) angeordnete Führungsausnehmungen (46, 48) aufweist.

11. Dehnschraube nach einem der voranstehenden Ansprüche, dadurch gekennzeichnet, daß das Führungselement (50, 52, 90, 92) im wesentlichen in einer durch die Spindelachse (16) hindurchgehenden Längsmittelebene (54) liegt.

12. Dehnschraube nach einem der voranstehenden Ansprüche, dadurch gekennzeichnet, daß das Führungselement (50, 52, 90, 92) aus Flachmaterial hergestellt ist.

13. Dehnschraube nach einem der voranstehenden Ansprüche, dadurch gekennzeichnet, daß der Führungsschenkel (51, 53, 96, 98, 100, 102) einen eckigen Querschnitt aufweist.

14. Dehnschraube nach einem der voranstehenden Ansprüche, dadurch gekennzeichnet, daß der Führungsschenkel (51, 53, 96, 98, 100, 102) mit seiner Flachseite (56, 58) parallel zur Längsmittelebene (54) angeordnet ist.

15. Dehnschraube nach einem der voranstehenden Ansprüche, dadurch gekennzeichnet, daß die Spindel (12) und der Dehnschraubenkörper (30, 32, 86, 88) zwischen zwei einander gegenüberliegenden Führungselementen (50, 52, 90, 92) eingeschlossen sind.

16. Dehnschraube nach einem der voranstehenden Ansprüche, dadurch gekennzeichnet, daß mindestens ein Gewindeabschnitt (18, 20) mit einer Dehnungsbegrenzung (68) versehen ist.

17. Dehnschraube nach Anspruch 16, dadurch gekennzeichnet, daß der Gewindeabschnitt (18, 20) auf seinem dem Spindelkopf (14) gegenüberliegenden Ende mit einer Verformung (68, 70) versehen ist.

## Claims

1. Expansion screw for a jaw expansion device having jaw expansion plates, having the following features:
   - a spindle (12) with a spindle head (14) and at least one threaded section (18, 20),
   - at least one expansion screw body (30, 32, 86, 88) into which the threaded section (18, 20) of the spindle (12) is screwed,
   - and at least one guide element (50, 52, 90, 92) which has at least one guide leg (51, 53, 96, 98, 100, 102), extending in the direction of guiding, for guiding the jaw expansion plates, and which has an opening pointing transversely to the direction of guiding for receiving and positioning the spindle head (14) in the direction of guiding, and which may be placed removably on the spindle (12), transversely to the direction of guiding, the guide element (50, 52, 90, 92) at the same time being held by the expansion screw body (30, 32, 86, 88) releasable transversely to the direction of guiding, so that said guide element may be placed on or inserted as a whole.

2. Expansion screw according to Claim 1, characterized in that the spindle (12) is a double spindle with two opposed threaded sections (18, 20), each threaded section (18, 20) being assigned an expansion screw body (30, 32, 86, 88).

3. Expansion screw according to one of Claims 1 or 2, characterized in that the receiving part is a cutout (60, 62), at least partly enclosing the spindle head, in the guide element (50, 52).

4. Expansion screw according to Claim 1 or 2, characterized in that the receiving part has two extension pieces (78, 80, 124, 126) extending transversely to the direction of guiding (76) and at least partly receiving between them the spindle head (14).

5. Expansion screw according to Claim 4, characterized in that the extension pieces (124, 126) enclose the threaded section (18, 20) in the manner of a half-shell.

6. Expansion screw according to one of the preceding claims, characterized in that the guide leg (96, 98, 100, 102) extends in contact-free manner along the length of the expansion screw body (86, 88).

7. Expansion screw according to one of Claims 1 to 5, characterized in that the guide leg (96, 98, 100, 102) bears against the expansion screw body (86, 88).

8. Expansion screw according to one of Claims 1 to 5, characterized in that the expansion screw body (30, 32) has a guide cutout (46, 48) enclosing the guide leg (51, 53) in a U-shape.

9. Expansion screw according to Claim 8, characterized in that the U-shaped guide cutout (46, 48) is open to a side remote from the spindle (12).

10. Expansion screw according to Claim 8 or 9, characterized in that the expansion screw body (30, 32) has guide cutouts (46, 48) arranged on both sides of the spindle (12).

11. Expansion screw according to one of the preceding claims, characterized in that the guide element (50, 52, 90, 92) lies substantially in a longitudinal centre plane (54) passing through the spindle axis (16).

12. Expansion screw according to one of the preceding claims, characterized in that the guide element (50, 52, 90, 92) is produced from flat material.

13. Expansion screw according to one of the preceding claims, characterized in that the guide leg (51, 53, 96, 98, 100, 102) has an angular cross-section.

14. Expansion screw according to one of the preceding claims, characterized in that the guide leg (51, 53, 96, 98, 100, 102) is arranged with its flat side (56, 58) parallel to the longitudinal centre plane (54).

15. Expansion screw according to one of the preceding claims, characterized in that the spindle (12) and the expansion screw body (30, 32, 86, 88) are enclosed by two mutually opposing guide elements (50, 52, 90, 92).

16. Expansion screw according to one of the preceding claims, characterized in that at least one threaded section (18, 20) is provided with an expansion limitation (68).

17. Expansion screw according to Claim 16, characterized in that the threaded section (18, 20) is provided on its end opposite the spindle head (14) with a deformation (68, 70).

**Revendications**

1. Vis d'expansion pour un dispositif d'expansion de mâchoire comportant des plaques d'expansion de mâchoire, présentant les caractéristiques suivantes:
   - une broche (12) avec une tête de broche (14) et au moins un tronçon fileté (18,20),
   - au moins un corps (30, 32, 86, 88) de vis d'expansion dans lequel se visse le tronçon fileté (18,20) de la broche (12),
   - et au moins un élément de guidage (50,52,90,92), qui présente, pour le guidage des plaques d'expansion de mâchoire, au moins un barreau de guidage (51,53,96,98,100,102) qui s'étend dans la direction de guidage, qui comporte une ouverture, orientée transversalement par rapport à la direction de guidage, pour loger et immobiliser la tête de broche (14) dans la direction de guidage et qui peut se placer sur la broche (12), de façon amovible, transversalement par rapport à la direction de guidage, étant précisé que, simultanément, l'élément de guidage (50,52,90,92) est maintenu par le corps (30,32,86,88) de la vis d'expansion avec liberté de déplacement transversalement par rapport à la direction de guidage, de sorte que cet élément peut se placer ou s'insérer comme un tout.

2. Vis d'expansion selon la revendication 1, caractérisée par le fait que la broche (12) est une broche double avec deux tronçons (18,20) filetés à pas inverse, un corps (30,32,86,88) de vis d'expansion correspondant à chaque tronçon fileté (18,20).

3. Vis d'expansion selon l'une des revendications 1 ou 2, caractérisée par le fait que le logement est un évidement (60,62) de l'élément de guidage (50,52) qui enserre au moins partiellement la tête de broche.

4. Vis d'expansion selon la revendication 1 ou 2, caractérisée par le fait que le logement comprend deux doigts 78,80,124,126) qui s'étendent transversalement par rapport à la direction du guidage (76) et logent au moins partiellement entre eux la tête de broche (14).

5. Vis d'expansion selon la revendication 4, caractérisée par le fait que les doigts (124,126) enserrent le tronçon fileté (18,20) à la façon d'une demi-coque.

6. Vis d'expansion selon l'une des revendications précédentes, caractérisée par le fait que le barreau de guidage (96,98,100,102), s'étend sans contact le long du corps (86,88) de vis d'expansion.

7. Vis d'expansion selon l'une des revendications 1 à 5, caractérisée par le fait que le barreau de guidage (96,98,100,102) s'appuie contre le corps (86,88) de vis d'expansion.

8. Vis d'expansion selon l'une des revendications 1 à 5, caractérisée par le fait que le corps (30,32) de vis d'expansion présente un évidement de guidage (46,48) qui enserre en forme de U le barreau de guidage (51,53).

9. Vis d'expansion selon la revendication 8, caractérisée par le fait que l'évidement de guidage (46,48) en forme de U est ouvert en direction du côté opposé à la broche (12).

10. Vis d'expansion selon les revendications 8 ou 9, caractérisée par le fait que le corps (30,32) de vis d'expansion présente des évidements de guidage (46,48) disposés des deux côtés de la broche (12).

11. Vis d'expansion selon l'une des revendications précédentes, caractérisée par le fait que l'élément de guidage (50,52,90,92) est essentiellement situé dans un plan médian longitudinal (54) passant par l'axe (16) de la broche.

12. Vis d'expansion selon l'une des revendications précédentes, caractérisée par le fait que l'élément de guidage (50,52,90,92) est fabriqué en un matériau plat.

13. Vis d'expansion selon l'une des revendications précédentes, caractérisée par le fait que le barreau de guidage (51,53,96,98,100,102) présente une section angulaire.

14. Vis d'expansion selon l'une des revendications précédentes, caractérisée par le fait que le barreau de guidage (51,53,96,98,100,102) est disposé avec sa face plate (56,58) parallèle au plan médian longitudinal (54).

15. Vis d'expansion selon l'une des revendications précédentes, caractérisée par le fait que la broche (12) et le corps (30,32,86,88) de la vis d'expansion sont enfermés entre deux éléments de guidage (50,52,90,92) situés en face l'un de l'autre.

16. Vis d'expansion selon l'une des revendications précédentes, caractérisée par le fait qu'au moins un tronçon fileté (18,20) est muni d'une limitation d'expansion (68).

17. Vis d'expansion selon la revendication 16, caractérisée par le fait que le tronçon fileté (18,20) présente une déformation (68,70) à son extrémité opposée à la tête de broche (14).

FIG.1

FIG.2

FIG.3

FIG.4

EP 0 304 756 B1

FIG.5

FIG.6

FIG.7

FIG.8